# EUROPEAN PATENT SPECIFICATION

(11) **EP 0 652 806 B1**
(45) Date of publication and mention of the grant of the patent: **30.09.1998**
(21) Application number: 94915414.0
(22) Date of filing: 25.04.1994
(51) Int. Cl.: B01L 3/00, G01N 35/04

(54) **SAMPLE SEGMENT**
PROBENTRAEGER
STRUCTURE POUR ECHANTILLON

(30) Priority: 03.06.1993 US 71831
(43) Date of publication of application: 17.05.1995
(73) Proprietor: Beckman Coulter, Inc., Fullerton, CA 92834-3100 (US)
(72) Inventor: GLENDAY, Ronald, C., Fullerton, CA 92633 (US); GOODALE, David, L., Yorba Linda, CA 92686 (US); MACK, Steven, D., Mira Loma, CA 91752 (US)
(74) Representative: Ede, Eric
(86) International application number: US9404516
(87) International publication number: WO9429024

(56) References cited:
- EP-A- 0 100 663
- EP-A- 0 204 109
- EP-A- 0 329 579
- EP-A- 0 415 307
- WO-A-92/20448
- US-A- 3 554 705

## Description

The present application is related to the following applications that are commonly assigned and filed concurrently herewith: US-A-5 356 525 ; US-A-5 417 925 ; US-A-5 605 666.

### Field

The present invention relates to the field of sample and reagent carrying devices, and more particularly to sample carrying devices useful in automated analyzers.

### Background

Various forms of sample carrying devices are known in the art. For example US-A-3 713 985 (Astle) describes a testing device which includes a plurality of receptacles or wells interconnected integrally by a horizontal support member. The device includes vertical support members or legs and several of the receptacles contain a range of biological control reagents in an essentially dry form. The receptacles are sealed by a sealing material such as plastic film or aluminium foil by heat or pressure.

Still other forms of devices are known for use on automated analyzers. As an example, U.S. Patent No. 4,298,570 (Lillig) describes a tray section that has a plurality of wells. The tray section is carried by a turntable, which also receives sample containers. A sample is pipetted from a sample container into a well in the tray section, where additional dilutions of the sample are made. The diluted samples are then taken by an automated pipette to a reaction cell for analysis.

As described in the concurrently filed application US-A-5356525 entitled "Sample Handling System", and identified above (and which is not admitted to be prior art with respect to the present invention by its mention in this Background), there is disclosed in such Application a novel and inventive system which is useful with a sample device or segment that is moved about by the system to accomplish the required analysis. However, neither the Lillig or Astle device is suitable for use with such a system because, for example, neither device includes structure that could be readily gripped by a transport apparatus.

Further, such system is adapted to be used in a capillary electrophoresis analyzer that performs, for example, immunosubstraction capillary electrophoresis analyses. Such analyses require reagents, including liquid reagents, to be stored in the device. Although Astle describes a sealing material, sealing of the type of Astle tends to allow leakage between adjacent reservoirs, particularly with a liquid reagent, and thus would be unsatisfactory for analytical techniques such as capillary electrophoresis, particularly where adjacent reagents are different.

Reagent mixing within the reservoirs of a sample device is also desirable as, for example, in an immunosubtraction capillary electrophoresis analysis. Both Lillig and Astle devices, however, would require, for example, an external stirring device to accomplish effective mixing of the reagents.

WO92/20448 describes a microplate for containment of radioactive samples, the microplate having an array of sample wells provided therein. This document addresses the problem of providing an improved microplate which is chemically resistant to the solvents included in the radioactive samples. The individual samples are joined to vertically and horizontally adjacent wells by a connector to give rigidity to the microplate.

EP-A-0329579 describes a microplate having a plurality of removable sample wells provided within a centrally raised region of the microplate. Each well has two frustoconically diverging wells joined by a annular rim and a flat base parallel to the rim. The wells are specifically designed to allow analysis with only a small volume of bacterial suspension and are intended to be used for short incubation periods.

(D1) EP-A-0415307 describes a cuvette matrix and its tray suitable for use in different diagnostic measurements. The matrix comprises adjacent cuvettes or wells connected with one another by flexible connecting elements. The tray has an aperture for each well, with a flexible clamping element. The inside of the wells is cylindrical and the bottom forms a light transmission measuring window. On the outer surfaces of the wells is a shoulder which determines how deep the wells can be pushed into the tray.

(D3) EP-A-0204109 describes a self-contained reagent package device for an assay which can be used in a chemical analyzer. The device comprises a support member, a plurality of wells, and a protective cover sealed over the open ends of the wells to maintain incorporated reagents in a stable form prior to use. One of the wells has on its interior surfaces an immunoreactive substance for carrying out the assay, at least one of the wells includes a reagent, and one of the wells is empty.

US-A-3 554 705 describes disposable reaction containers suitable for use with automated analytical systems, such as for chemical analysis of body fluids. The disposable containers have a lower compartment for the admixing and reaction of reagents and sample material, and a storage section having at least one reagent storage chamber. Each reaction compartment has at least one pair of opposite substantially vertical side walls which define an optical window through which optical analysis is made.

EP-A-0100663 describes dilution cups for a spectrophotometer analyzer. A spectrophotometer analyzer is provided having a turntable transport with an outer circle of spaced reaction cups and a spaced inner circle of sample cups, characterized by an intermediate circle of disposable dilution cups formed of a plurality of unitary multi-cup one-piece arc units disposed between the inner and outer circle of cups. A novel interior configuration of each reaction cup which inhibits incomplete mixing is also provided.

Thus, there is a need for a sample-carrying device that is suitable for use in an analyzer wherein the sample-carrying device is transported within the analyzer to accomplish a desired analysis. There is also a need for a sample carrying device that can be more surely sealed to prevent leakage of reagents, such as liquid reagents, between adjacent reservoirs. There is also a need for a sample carrying device with improved mixing capabilities within the device reservoirs.

### Summary of the Invention

According to the present invention there is provided a sample segment having the features as defined in claim 1.

Additionally, the sample segment may include a raised rib on the second surface of the body adjacent the edges of the body.

Additionally, the sample segment may include a second indexing rib between the first surface of the body and the exterior of a second selected well.

Additionally, the sample segment may include a raised annular boss on the second surface of the body around the opening of at least one well.

Additionally, the sample segment may include a cover that is applied over the raised rib and the boss, and is sealed to the boss.

Additionally, the dimension by which the raised rib is raised with respect to the second surface of the body may be greater than the dimension by which the boss is raised with respect to the second surface of the body, and the cover may be stretched across the raised rib before the cover is pressed and sealed against the boss.

Additionally, the body of the sample segment may comprise a flange having a first surface and a second surface, and the plurality of wells are formed in the flange, and wherein the interior volume of the wells is defined by a tapered interior wall and a rounded interior bottom, and the exterior surfaces and exterior ends of the wells are proximate the first surface of the flange.

Additionally, the flat surface of the sample segment may be perpendicular to a central axis of the at least two wells.

Additionally, the sample segment may include a free mixing element is provided within at least one of the wells.

Additionally, the exterior surfaces of the at least two wells may include exterior ends, and the exterior surfaces of the at least two wells between the flat surface and the ends of the wells are reduced relative to the exterior surfaces between the opening of the wells and the flat surface. The reduced exterior surfaces may be tapered.

Additionally, a plane defined by the surfaces can be essentially perpendicular to central axes of the wells. The exterior ends of the wells around which the surfaces are formed are reduced. The reduced portion may be tapered and the end itself may be rounded. The interior walls of the wells may also be tapered.

Additionally, the sample segment may include curved opposite edges and the wells may be formed along an arc defined between such edges.

In another aspect of the present invention, the sample segment may include a body, a plurality of wells, and a raised boss on the body around the opening of one of the wells. Bosses may be formed around additional ones or all of the wells, and a cover may be applied to the bosses to seal the wells. The cover may be a label and a reagent may be in the wells before sealing.

In yet another aspect of the present invention, a sample segment may include a body, a plurality of wells, and a mixing element disposed in at least one of the wells. The mixing element may take the form of a length of wire.

Further, a sample segment in accordance with the present invention may include various combinations of the features just described.

### Brief Description of the Drawings

These and other features and advantages of the present invention will be apparent from the drawings in which:
Figure 1 is a perspective view of a sample segment in accordance with the present invention;
Figure 2 is a section view of the sample segment of Figure 1 taken along line 2-2 thereof;
Figure 3 is a bottom view of the sample segment of Figure 1; and
Figure 4 is a simplified perspective view of a transport means with which the sample segment of Figure 1 may be used.

### Detailed Description

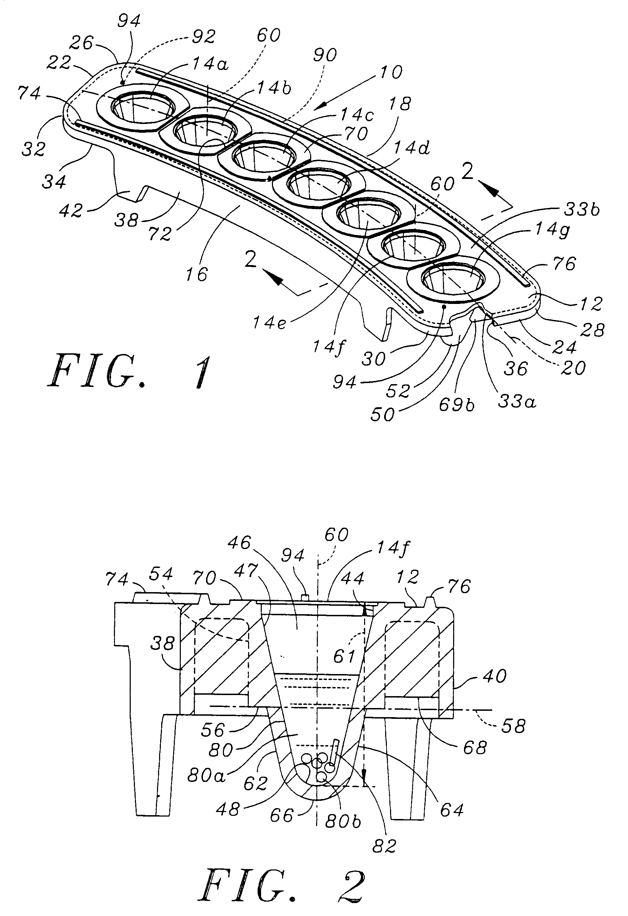

With reference to Figure 1, a sample segment 10 in accordance with the present invention is defined by a body in the form of a flange 12 and a plurality of wells 14. The flange 12 is generally arcuate, having curved opposite edges 16, 18 and an arcuate center line 20. The flange 12 has ends 22, 24 that are generally perpendicular to the center line 20 and rounded comers 26, 28, 30, 32 and first and second surfaces 33a, 33b.

Depending lips 34, 36 and depending sides 38, 40 are formed around the periphery of the flange 12, the lips 34, 36 being proximate the ends 22, 24 and the sides 38, 40 being formed along most of the lengths of the edges 16, 18. Bach of the sides 38, 40 includes two legs 42 suitable for supporting the sample segment 10 on a flat surface.

In the embodiment disclosed herein, seven wells 14, identified individually as wells 14a-14g in Figure 1, are defined in the sample segment 10. Bach well 14 lies on the arcuate center line 20 and defines a round opening 44 (Figure 2) in the flange 12 and has an interior volume 46 defined by a tapered interior wall surface 47 and a rounded interior bottom surface 48. The exterior surfaces 50 of all but two of the wells 14 are similarly tapered and have similarly rounded exterior ends 52. In the specific embodiment disclosed herein, the interior volume 46 is about 205 µl, although other volumes may be suitable.

The two wells 14b, 14f, which each are the second well from the respective ends 22, 24, have an exterior cylindrical wall portion 54 proximate the flange 12, the wall portion 54 defining an annular flat surface or shoulder 56. The flat surfaces 56 on the shouldered wells 14b, 14f together define a plane 58 that is generally parallel to the flange 12. Thus, the flat surfaces 56 are generally perpendicular to central axes 60 of the wells 14b, 14f. The axis 60 also defines an interior axial dimension 61 between the top of the round opening 44 (as oriented in Figure 2) and the bottom surface 48. As seen, for example, in Figure 2, most of the interior volume 46 of each of the shouldered wells 14b, 14f is between the plane 58 and the openings 44 for such wells. The remaining lower exterior wall 62 of the shouldered wells 14b, 14f is similar to the other wells such as shouldered well 14g shown in Figure 1, having a tapered or reduced wall portion 64 and a rounded exterior end or end portion 66. As is also seen with reference to Figure 2, the flat surfaces 56 are between the first surface 33a and the exterior end 66, and the flat surfaces 56 can also be described as substantially midway along the interior axial dimension 61.

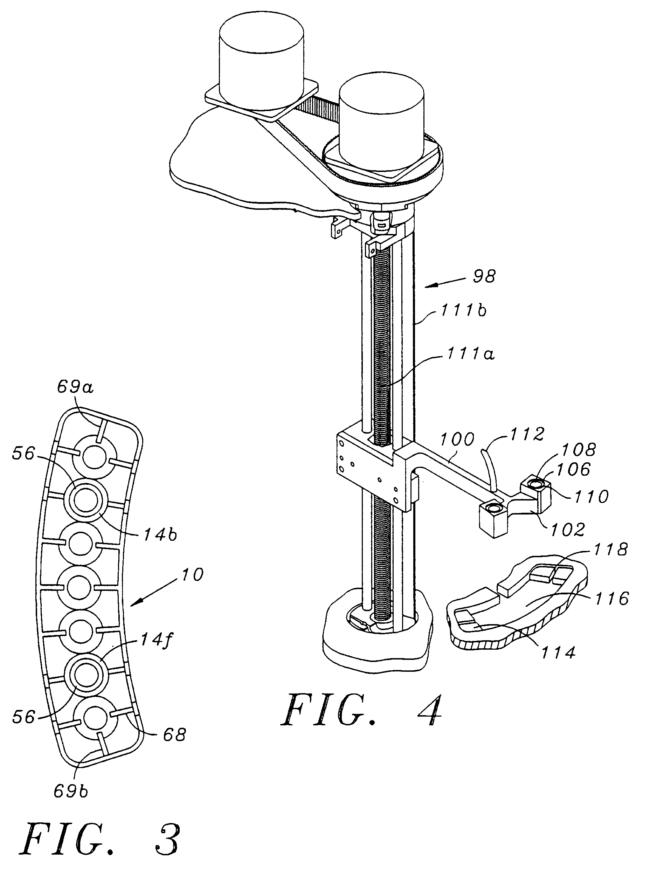

Reinforcing ribs 68 (Figures 2, 3) are formed between the flange 12, wells 14 and depending sides 38, 40, adding strength and rigidity to the sample segment 10. Indexing ribs 69a, 69b (Figure 1,3) are formed proximate the ends 22, 24 between the flange 12, lips 34, 36 and the end wells 14a, 14g, and are thus generally triangular in shape. The indexing ribs 69a, 69b are used to locate or index the sample segment 10 with respect to supports on an analyzer on which the sample segment 10 may be used as is described with reference to Figure 4 below.

Each well 14 includes an annular raised boss 70 formed around the openings 44. Each of the bosses 70 is separate and discontinuous from adjoining ones of the bosses 70 by means of grooves 72. Raised ribs 74, 76 are proximate the edges 16, 18, respectively, the ribs 74, 76 projecting from the flange 12 more than the bosses 70.

Selected ones or all of the wells 14 may carry a reagent 80, shown for illustration purposes in the cross-section view of well 14g in Figure 1. The reagents 80 may take the form of a liquid component 80a and a solid support component 80b as may be useful, for example, in capillary electrophoretic immunosubtraction. Such a technique is disclosed in US-A-5 228 960 entitled "Analysis of Samples by Capillary Electrophoretic Immunosubtraction," in the name of Liu, et al. Other forms of reagents for other types of analysis will be apparent to those skilled in the art. Selected ones or all of the wells 14 may also carry a mixing element 82, formed in this embodiment from round nickel chromium wire. The mixing element 82 is about 0.10 cm (0.040 inch) in diameter and about 0.31 cm (0.125 inch) long in this particular embodiment, but other dimensions may also be suitable. Preferably, each of the wells 14 that includes a reagent 80 also includes a mixing element 82, although such a relationship may not be necessary according to the mixing requirements for the reagent 80. Further, a mixing element 82 could be contained in a well 14 which contains no prepackaged reagents 80.

The sample segment 10 may include a sealing cover such as a label 90. The label 90 may be laminate of metal foil and plastic film and is formed to cover the flange 12, and has alignment holes 92 which are sized to receive locating pins 94 on the flange 12 proximate the wells 14a, 14g. The label 90 may be printed on the exposed side and may carry, for example, human and/or machine readable characters.

The sample segment 10 may be formed, for example, from HDPE via injection molding and is prepared by adding the desired reagents 80 and mixing elements 82. The label 90 is aligned by means of the locating pins 94. Preferably, the label 90 is first pressed across the ribs 74, 76 and affixed or "tacked" to the ribs 74, 76, such as by heat sealing to hold the label 90 in place. The label 90 is then pressed against and heat sealed to the bosses 70. Because the ribs 74, 76 project further from the flange 12 than the bosses 70, this sequence causes the label 90 to be slightly stretched as it is pressed and sealed against the bosses 70, ensuring that the label 90 is not wrinkled or otherwise deformed as it is fixed to the sample segment 10 and improving the seal between the label 90 and the bosses 70. The heat sealing of the label 90 is best accomplished when the plastic film side of the label 90 is against the plastic material from which the sample segment 10 is formed.

The sample segment 10 is useful with an automated transport means which receives and removably retains the sample segment 10 by means of the flat surfaces 56 and exterior walls 62 on the wells 14b, 14f. Such an automated transport means 98 (Figure 4) may include, for example, an arm 100 with forks or projections 102 at one end thereof. The projections 102 carry flexible boots 106 that include sealing upper rims 108 and interiors 110 shaped to conform to the exterior walls 62. The interiors 110 are connected to tubing 112 which is in turn connected to a controllable source of vacuum. The boots 106 and interiors 110 are spaced to align with the axes 60 of the wells 14b, 14f. The automated transport means 98 also may include means, such as a lead screw 111a and spindle 111b for rotational and vertical displacement of the arm 100.

The automated transport means may also include holding means for the sample segment 10 having supports 114 upon which the ends 22, 24 are supported with an open area 116 through which the projections 102 can be raised. Slots 118 in the supports 114 are spaced and sized to receive the indexing ribs 69a, 69b, thus indexing or accurately positioning the sample segment 10 with respect to the open area 116 and thus the automated transport means 98. To retrieve and removably retain the sample segment 10, the sample segment 10 is disposed on the holding means and the boots are aligned with the wells 14b, 14f. The arm 100 is moved upwardly to receive the exterior walls 62 and flat surfaces 56. Vacuum is applied via the tubing 112, holding the sample segment 10 in place. Thus, by moving the arm 100, the sample segment 10 may be transported about, for example, for addition and removal of fluid via a probe (not shown) and the like. Further, the arm 100 may describe a motion wherein the arm 100 is rotated horizontally about a vertical axis, the boots 106 following a constant radius path about the vertical axis. Preferably, an arc of such a path matches the arcuate center line 20 of the flange 12.

The arm 100 with the sample segment 10 retained thereon may be agitated, for example, by being vibrated to achieve mixing of the well 14 contents. The mixing element 82, during such agitation, creates a thorough and rapid mixing action, the element 82 climbing the interior surface 47 as the vortexing action is induced by such agitation. This provides a scraping action that promotes a thorough mixing of well 14 contents.

Conversely, the sample segment 10 can be deposited at the supports 114 by lowering the arm 100 through the open area 116 until the sample segment 10 is indexed by the indexing ribs 69a, 69b engaging the slots 118 and the sample segment 10 comes to rest on the supports 114, releasing the vacuum, and further lowering the arm 100.

Thus, a sample segment 10 in accordance with the present invention is particularly and uniquely adapted for transport by means of automatic transport means. A sample segment 10 in accordance with the present invention provides a unique and leak-resistent seal over the wells 14 thereof. Further, a sample segment in accordance with the present invention includes a mixing element that provides improved and consistent mixing of reagents that may be contained within or added to the wells 14. These advantages are evident from these individually inventive aspects of the present invention, and further advantages are evident by combinations of such aspects.

While the segment 10 is referred to herein as a sample segment, it is to be recognized that the segment 10 is not to be limited merely to samples, but is useful for various reagents that may be used in analysis. Thus, the word "sample" is to be read and interpreted broadly to include but not be limited to, for example, liquid as well as solid patient samples, reagents, diluents, buffers, and the like, and solutions thereof.

The present invention is not to be limited to the particular embodiment described herein but shall be accorded the full scope of the appended claims and all equivalents thereof.

## Claims

1. A sample segment (10) for use with an automated analyzer having transport means (98) comprising an arm (100) provided with forks (102) at one end thereof, the sample segment comprising a generally arcuate flange having a first surface (33a), a second surface(33b), curved opposite edges (16,18) and an arcuate center line (20); and a plurality of wells (14) formed in the flange along said arcuate center line (20), the wells having exterior surfaces (50) and exterior ends (52), each of the wells having an opening (44) in the first surface of the body and defining an interior volume (46); wherein at least two of the wells include exterior flat surfaces (56) formed about exterior walls of the at least two wells,
the flat surfaces (56) are annular and face downwardly in a direction parallel to an interior axial dimension (61) of the at least two wells, and the flat surfaces (56) are disposed substantially midway along the interior axial dimension and between the first surface (33a) of the flange and exterior ends (66) of the at least two wells, and wherein the flat surfaces (56) are adapted for direct engagement by the automated analyzer, so as to retain the sample segment (10) in place in the automated analyzer,
and, the sample segment further comprising an indexing rib (69a) between the first surface (33a) of the flange and the exterior surface of a selected well, wherein the indexing rib is adapted to locate the sample segment with respect to supports on the automated analyzer.

2. A sample segment according to claim 1 further comprising a raised rib (74) provided on the second surface adjacent the edges (16, 18) of the body.

3. A sample segment according to claims 1 or 2 wherein the sample segment (10) includes a second indexing rib (69b) between the first surface of the body and the exterior of a second selected well.

4. A sample segment according to claim 2 wherein the sample segment (10) includes a raised annular boss (70) on the second surface of the body around the opening (44) of at least one well.

5. A sample segment according to claim 4 wherein the sample segment further comprises a cover (90) that is applied over the raised rib (74) and the boss (70), and is sealed to the boss (70).

6. A sample segment according to claim 5 wherein the dimension by which the raised rib (74) is raised with respect to the second surface of the body is greater than the dimension by which the boss (70) is raised with respect to the second surface of the body, and the cover (90) is stretched across the raised rib before the cover is pressed and sealed against the boss.

7. A sample segment according to any one of the preceding claims wherein the body comprises a flange (12) having first surface (33a) and second surface (33b); and the plurality of wells (14) are formed in the flange (12), and wherein the interior volume (46) of the wells is defined by a tapered interior wall (47) and a rounded interior bottom (48), and the exterior surfaces (50) and exterior ends (52) of the wells (14) are proximate the first surface of the flange.

8. A sample segment according to claim 6 wherein the flat surfaces (56) are perpendicular to a central axis (60) of the at least two wells.

9. A sample segment according to any one of the preceding claims wherein a free mixing element (82) is provided within at least one of the wells.

10. A sample segment according to any one of the preceding claims wherein the exterior surfaces (50) of the at least two wells (14b, 14f) include exterior flat ends (56) and the exterior surfaces (50) of the at least two wells between the flat surfaces (56) and the ends (66)of the wells are reduced relative to the exterior surfaces between the opening (44) of the wells and the flat surfaces (56).

11. A sample segment according to claim 10 wherein the reduced exterior surfaces (50) are tapered.

## Patentansprüche

1. Proben-Träger (10) zur Verwendung mit einer automatisierten Analysevorrichtung, die Transporteinrichtungen (98) mit einem Arm (100) aufweist, der an einem seiner Enden Gabein (102) aufweist, wobei der Proben-Träger einen allgemein gekrümmten Flansch aufweist, der eine erste Oberfläche (33a), eine zweite Oberfläche (33b), sich gegenüberliegende gebogene Kanten (16, 18) und eine gekrümmte Mittellinie (20) aufweist, wobei eine Vielzahl von Wannen (14) in dem Flansch entlang der gekrümmten Mittellinie (20) ausgebildet ist, wobei die Wannen Außenoberflächen (50) und Außenenden (52) aufweisen, wobei jede der Wannen eine Öffnung (44) in der ersten Oberfläche des Körpers aufweist und ein Innenvolumen (46) bildet, wobei zumindest zwei der Wannen flache Außenoberflächen (56) aufweisen, die um die Außenwände der zumindest zwei Wannen herum gebildet sind, wobei die flachen Oberflächen (56) ringförmig und nach unten in eine Richtung parallel zu einer axialen Innenabmessung (61) der zumindest zwei Wannen gerichtet sind, wobei die flachen Oberflächen (56) im wesentlichen mittig entlang der axialen Innenabmessung zwischen der ersten Oberfläche (33a) des Flansches und den Außenenden (66) der zumindest zwei Wannen angeordnet sind, wobei die flachen Oberflächen (56) zum direkten Eingriff der automatisierten Analysevorrichtung ausgebildet sind, um den Proben-Träger (10) in der automatisierten Analysevorrichtung an seinem Platz zu halten, wobei der Proben-Träger weiterhin eine Positionierrippe (69a) zwischen der ersten Oberfläche (33a) des Flansches und der Außenoberfläche einer ausgewählten Wanne aufweist, und wobei die Positionierrippe dazu ausgebildet ist, den Proben-Träger bezüglich Halterungen an der automatisierten Analysevorrichtung zu positionieren.

2. Probenträger nach Anspruch 1, der weiterhin eine erhöhte Rippe (74) aufweist, die auf der zweiten Oberfläche benachbart zu den Kanten (16, 18) des Körpers vorgesehen ist.

3. Probenträger nach Anspruch 1 oder 2, wobei der Probenträger (10) eine zweite Positionier-Rippe (69b) zwischen der ersten Oberfläche des Körpers und dem Äußeren einer ausgewählten zweiten Wanne aufweist.

4. Probenträger nach Anspruch 2, wobei der Probenträger (10) einen erhöhten ringförmigen Vorsprung (70) auf der zweiten Oberfläche des Körpers um die Öffnung (44) von zumindest einer Wanne herum aufweist.

5. Probenträger nach Anspruch 4, wobei der Probenträger weiterhin eine Abdeckung (90) aufweist, die über die erhöhte Rippe (74) und den Vorsprung (70) aufgebracht wird, und die mit dem Vorsprung (70) dichtend verbunden wird.

6. Probenträger nach Anspruch 5, bei dem die Abmessung mit der die erhöhte Rippe (74) gegenüber der zweiten Oberfläche des Körpers erhöht ist, größer als die Abmessung ist, mit der der Vorsprung (70) gegenüber der zweiten Oberfläche des Körpers erhöht ist, und bei dem die Abdeckung (90) über die erhöhte Rippe gespannt wird, bevor die Abdeckung gegen den Vorsprung gedrückt und abgedichtet wird.

7. Probenträger nach einem der vorhergehenden Ansprüche, bei dem der Körper einen Flansch (12) mit einer ersten Oberfläche (33a) und einer zweiten Oberfläche (33b) aufweist; und bei dem die Vielzahl von Wannen (14) in dem Flansch (12) gebildet sind, und bei dem das Innenvolumen (46) der Wannen durch eine sich verjüngende Innenwand (47) und einen abgerundeten Innenboden (48) gebildet ist, und bei dem die Außenoberflächen (50) und Außenenden (52) der Wannen (14) im Bereich der ersten Oberfläche des Flansches liegen.

8. Probenträger nach Anspruch 6, bei dem die flachen Oberflächen (56) senkrecht zu einer Mittelachse (60) der zumindest zwei Wannen verlaufen.

9. Probenträger nach einem der vorhergehenden Ansprüche, bei dem ein freies Mischelement (82) in zumindest einer der Wannen vorgesehen ist.

10. Probenträger nach einem der vorhergehenden Ansprüche, bei dem die Außenoberflächen (50) der zumindest zwei Wannen (14b, 14f) äußere flache Enden (56) aufweisen und die Außenoberflächen (50) der zumindest zwei Wannen zwischen den flachen Oberflächen (56) und den Enden (66) der Wannen bezogen auf die Außenoberflächen zwischen der Öffnung (44) der Wannen und den flachen Oberflächen (56) reduziert sind.

11. Probenträger nach Anspruch 10, bei dem die reduzierten Außenoberflächen (50) verjüngt sind.

## Revendications

1. Structure pour échantillons (10) pour une utilisation avec un analyseur automatisé ayant des moyens de transport (98) comprenant un bras (100) muni de fourches (102) à une de ses extrémités, la structure pour échantillons comprenant une embase généralement arquée ayant une première surface (33a), une deuxième surface (33b), des bords opposés courbés (16, 18) et une ligne centrale arquée (20) ; et une pluralité de puits (14) formés dans l'embase le long de ladite ligne centrale arquée (20), les puits ayant des surfaces extérieures (50) et des extrémités extérieures (52), chacun des puits ayant une ouverture (44) dans la première surface du corps et définissant un volume intérieur (46) ; structure dans laquelle au moins deux des puits comprennent des surfaces plates extérieures (56) formées autour des parois extérieures des au moins deux puits,
les surfaces plates (56) sont annulaires et sont face vers le bas dans une direction parallèle à une dimension axiale intérieure (61) des au moins deux puits, et les surfaces plates (56) sont disposées sensiblement à mi-chemin le long de la dimension axiale intérieure et entre la première surface (33a) de l'embase et des extrémités extérieures (66) des au moins deux puits, et les surfaces plates (56) sont adaptées pour un engagement direct avec l'analyseur automatisé, de façon à retenir la structure pour échantillons (10) en place dans l'analyseur automatisé
et, la structure pour échantillons comprenant en outre une nervure d'indexage (69a) entre la première surface (33a) de l'embase et la surface extérieure d'un puits sélectionné, grâce à quoi la nervure d'indexage est adaptée à repérer la structure pour échantillons par rapport aux supports sur l'analyseur automatisé.

2. Structure pour échantillons selon la revendication 1, comprenant en outre une nervure en relief (74) fournie sur la deuxième surface, adjacente aux bords (16, 18) du corps.

3. Structure pour échantillons selon les revendications 1 ou 2, dans laquelle la structure pour échantillons (10) comprend une deuxième nervure d'indexage (69b) entre la première surface du corps et l'extérieur d'un second puits sélectionné.

4. Structure pour échantillons selon la revendication 2, dans laquelle la structure pour échantillons (10) comprend une protubérance annulaire en relief (70) sur la deuxième surface du corps, autour de l'ouverture (44) d'au moins un puits.

5. Structure pour échantillons selon la revendication 4, dans laquelle la structure pour échantillons comprend un outre un couvercle (90) qui est appliqué sur la nervure en relief (74) et la protubérance (70), et est fermé hermétiquement sur la protubérance (70).

6. Structure pour échantillons selon la revendication 5, dans laquelle la dimension par laquelle la nervure en relief (74) est surélevée par rapport à la deuxième surface du corps est plus grande que la dimension par laquelle la protubérance (70) est surélevée par rapport à la deuxième surface du corps, et le couvercle (90) est étiré en travers la nervure en relief avant que le couvercle soit pressé et fermé hermétiquement contre la protubérance.

7. Structure pour échantillons selon l'une quelconque des revendications précédentes, dans laquelle le corps comprend une embase (12) ayant une première surface (33a) et une seconde surface (33b) ; et la pluralité de puits (14) est formée dans l'embase (12) et dans laquelle lé volume intérieur (46) des puits est défini par une paroi intérieure conique (47) et un fond intérieur arrondi (48), et les surfaces extérieures (50) et les extrémités extérieures (52) des puits (14) sont à proximité de la première surface de l'embase.

8. Structure pour échantillons selon la revendication 6, dans laquelle les surfaces plates (56) sont perpendiculaires à un axe central (60) des au moins deux puits.

9. Structure pour échantillons selon l'une quelconque des revendications précédentes, dans laquelle un élément mélangeur libre (82) est fourni dans au moins un des puits.

10. Structure pour échantillons selon l'une quelconque des revendications précédentes, dans laquelle les surfaces extérieures (50) des au moins deux puits (14b, 14f) comprennent des extrémités plates extérieures (56) et les surfaces extérieures (50) des au moins deux puits entre les surfaces plates (56) et les extrémités (66) des puits sont réduites par rapport aux surfaces extérieures entre l'ouverture (44) des puits et les surfaces plates (56).

11. Structure pour échantillons selon la revendication 10, dans laquelle les surfaces extérieures réduites (50) sont coniques.
